# EUROPEAN PATENT SPECIFICATION

(11) **EP 2 708 139 B1**
(45) Date of publication and mention of the grant of the patent: **20.03.2019**
(21) Application number: 12786056.7
(22) Date of filing: 26.04.2012
(51) Int. Cl.: A23G 3/34, A23G 3/44, A23G 3/52, A23G 3/42

(54) **SOFT CANDY AND PRODUCTION METHOD FOR SOFT CANDY**
WEICHE SÜSSIGKEIT UND HERSTELLUNGSVERFAHREN FÜR DIE WEICHE SÜSSIGKEIT
BONBON MOU ET SON PROCÉDÉ DE PRODUCTION

(30) Priority: 13.05.2011 JP 2011108157
(43) Date of publication of application: 19.03.2014
(73) Proprietor: Lotte Co., Ltd., Tokyo 160-0023 (JP)
(72) Inventor: FUJIMOTO, Ichiro, Saitama 336-8601 (JP); HIGUCHI, Yo, Saitama 336-8601 (JP); YAMAMOTO, Hiroshi, Saitama 350-1331 (JP); OZAKI, Fumihiro, Saitama 336-8601 (JP)
(74) Representative: Witte, Weller & Partner Patentanwälte mbB
(86) International application number: PCT/JP2012/061243
(87) International publication number: WO 2012/157431

(56) References cited:
- EP-A2- 1 269 856
- WO-A1-2007/105661
- WO-A2-2007/149276
- JP-A- 3 147 743
- JP-A- 55 029 983
- JP-A- 60 043 342
- JP-A- 2009 039 064
- CHIIKI DAYORI 2000 NEN 9 GATSU 06 March 2010, XP008171489 Retrieved from the Internet: <URL:http://sugar.alic.go.jp/japan/ area/ja 0009.htm> [retrieved on 2012-05-21]

## Description

### TECHNICAL FIELD

The present invention relates to a soft candy production method.

### BACKGROUND ART

Prior-art candies related to the present invention are disclosed, for example, in PTL1 to PTL4.

PTL1 proposes a chewing candy which contains 0.5 to 5 wt% of pullulan and 0.2 to 2 wt% of gelatin.

PTL2 provides a soft candy which contains 0.5 to 3 wt% of pullulan and 2 to 5 wt% of gelatin and has a specific gravity of 0.6 to 1.1.

PTL3 provides a soft candy which contains 0.5 to 5 wt% of gelatin, 20 to 50 wt% of disaccharides excluding sucrose, and a balance of 45 to 79.5 wt%.

PTL4 provides a soft candy which mainly contains sugar, starch syrup and oil, wherein a higher melting point vegetable oil having a melting point of not lower than 38 °C and not higher than 45°C is blended in a proportion of not less than 6 wt% and not greater than 30 wt%.

### CITATION LIST

### PATENT LITERATURE

PTL1: JP-SHO55(1980)-29983A
PTL2: JP-2009-39064A
PTL3: JP-2009-39096A
PTL4: JP-2971331B

### SUMMARY OF INVENTION

### TECHNICAL PROBLEM

Conventionally, it is proposed to blend both the pullulan and the gelatin in the soft candy (e.g., PTL1 to PTL3). If only the pullulan is blended in the soft candy, the soft candy is liable to be sticky to teeth. If only the gelatin is blended in the soft candy, it is difficult to impart the soft candy with a rich eating texture.

In PTL2, it is disclosed that a pullulan dough and an aerated dough are blended together to reduce the specific gravity of the candy. Thus, a soft candy is provided, which is imparted with a glutinous and resilient eating texture without increasing the chewing hardness and is free from stickiness to teeth (Paragraph [0006] in PTL2).

Where the method described in PTL2 is employed to produce the soft candy by aerating a solution (syrup) containing sugar, starch syrup and gelatin by means of a foaming machine, cooling the resulting aerated dough, and mixing the pullulan dough with the aerated dough, the resulting soft candy has a specific gravity of 0.6 to 1.1, but is unsatisfactory in eating texture and sticky to teeth.

In view of the foregoing, it is a major object of the present invention to provide a soft candy production method, where the resulting soft candy is less sticky to teeth, and has a light and rich eating texture and a sufficient chewability.

### SOLUTION TO PROBLEM

According to an aspect, there is provided a soft candy which comprises a candy dough comprising 0.2 to 5 wt% of pullulan and 0.2 to 2 wt% of gelatin and impregnated with gas bubbles.

A soft candy is obtained by imparting the candy dough with a specific gravity controlled to not greater than 1.2 by the impregnation of the candy dough with the gas bubbles, and shaping the candy dough imparted with the specific gravity controlled to not greater than 1.2.

According to another aspect, the specific gravity of the soft candy is 0.8 to 1.2.

According to another aspect the soft candy is produced by controlling the impregnation of the candy dough with the gas bubbles by means of a pulling machine including at least two rotary arms disposed in spaced relation and a roller disposed between the two rotary arms by stretching the candy dough between one of the two rotary arms and the roller, and holding an intermediate portion of the stretched candy dough by the other rotary arm and stretching the candy dough by a rotary force of the other rotary arm to fold the candy dough at the portion of the candy dough held by the other rotary arm.

The soft candy production method, according to claim 1, includes the steps of: preparing a candy dough containing 0.2 to 5 wt% of pullulan and 0.2 to 2 wt% of gelatin; and stretching and kneading the candy dough to aerate the candy dough to impregnate the candy dough with gas bubbles.

The step of impregnating the candy dough with the gas bubbles includes the step of imparting the candy dough with a specific gravity controlled to not greater than 1.2 by the impregnation of the candy dough with the gas bubbles, and the soft candy production method of claim 5 further includes the step of shaping the candy dough imparted with the specific gravity controlled to not greater than 1.2.

The step of impregnating the candy dough with the gas bubbles includes a pulling step to be performed by means of a pulling machine which prefereably includes at least two rotary arms disposed in spaced relation and a roller disposed between the two rotary arms, and the pulling step preferably includes the steps of: stretching the candy dough between one of the two rotary arms and the roller; and holding an intermediate portion of the stretched candy dough by the other rotary arm and stretching the candy dough by a rotary force of the other rotary arm to fold the candy dough at the portion of the candy dough held by the other rotary arm in the soft candy production method.

Preferably, the pulling machine includes a predetermined number of rotary arms disposed in spaced relation to each other, and a predetermined number of rollers disposed between respective adjacent pairs of rotary arms in the soft candy production method.

Preferably, the candy dough stretching step and the candy dough folding step are repeatedly performed in the pulling step in the soft candy production method.

Preferably, the step of imparting the candy dough with the controlled specific gravity includes the step of controlling the specific gravity of the candy dough to 0.8 to 1.2 in the soft candy production method.

There is provided a soft candy which comprises 0.2 to 5 wt% of pullulan and 0.2 to 2 wt% of gelatin.

Preferably, the soft candy is impregnated with gas bubbles.

Preferably, the soft candy has a specific gravity of 0.8 to 1.2.

Preferably, the soft candy has a specific gravity controlled by using a pulling machine.

### ADVANTAGEOUS EFFECTS OF INVENTION

The soft candy production method according to the invention is described in the claims.

According to the present invention, the soft candy production method provides a soft candy which contains 0.2 to 5 wt% of pullulan and 0.2 to 2 wt% of gelatin and, therefore, is substantially free from stickiness to teeth, and has a sufficient chewability, a moderate resilience, and a light and rich eating texture.

Further, the soft candy is impregnated with the gas bubbles and has a specific gravity of not greater than 1.2. Therefore, when the soft candy is put in a mouth of an eater, the eater can enjoy a light and rich eating texture and a sufficient chewability. In order to impregnate the soft candy with the gas bubbles or to impart the soft candy with a specific gravity of not greater than 1.2, the candy dough is stretched and kneaded to be aerated to be impregnated with the gas bubbles. Therefore, the gas bubbles can be generally uniformly and evenly distributed in the candy. As a result, it is possible to alleviate the stickiness to teeth and to ensure a satisfactory and rich eating texture and a sufficient chewability.

Further, the step of impregnating the candy dough with the gas bubbles is performed by means of the pulling machine. Thus, the candy dough stretching step and the candy dough folding step are repeatedly performed by higher speed rotation of the rotary arm to knead the candy dough and to evenly impregnate the candy dough with the gas bubbles. As a result, it is possible to further alleviate the stickiness to teeth and to ensure the light eating texture.

The specific gravity may be reduced by using a pressure mixer or by mixing the candy dough with an aerated dough separately prepared. However, these methods do not involve the step of kneading the candy dough by stretching and folding the candy dough and, therefore, cannot take advantage of the characteristic properties of the candy dough. As a result, these methods fail to provide a candy which is less sticky to teeth and has a light and rich eating texture and a sufficient chewability.

### BRIEF DESCRIPTION OF DRAWINGS

FIG. 1 is a diagram illustrating an overall soft candy obtained by the method according to the invention.
FIG. 2 is a flow chart showing a sequence of process steps for producing the soft candy.
FIG. 3 is a schematic diagram showing the construction of a pulling machine to be used in a pulling step shown in FIG. 2.
FIGS. 4(a) to 4(d) are diagrams for explaining the procedure of the pulling step.

### DESCRIPTION OF EMBODIMENT

An embodiment of the present invention will hereinafter be described in detail with reference to the attached drawings.

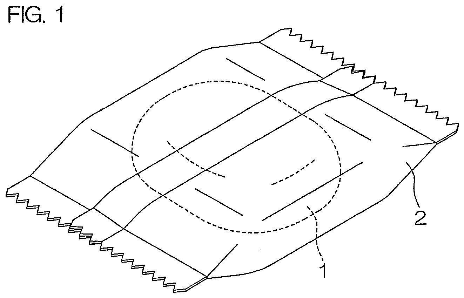

FIG. 1 is a diagram illustrating an overall soft candy obtained by the method according to the invention. The soft candy 1 is spherical, and is wrapped with an individual wrapping sheet 2. The individual wrapping sheet 2 is provided, for example, in the form of a back-seam bag (butt-seam bag) made of an aluminum deposited film or a plastic film and sealed along an upper edge, a lower edge and a back middle portion.

The soft candy 1 is produced by shaping a candy dough containing saccharides, an oil, an emulsifier, a milk material, pullulan and gelatin, and has a specific gravity of not greater than 1.2 (preferably 0.8 to 1.2) . The specific gravity is defined as the ratio of the density of the soft candy 1 to the density of distilled water at 4°C (soft candy 1/distilled water).

Examples of the saccharides to be contained in the candy dough include sugar and non-sugar saccharides including monosaccharides such as glucose and fructose, disaccharides such as maltose and lactose, oligosaccharides such as starch syrup and maltodextrin, sugar alcohols such as sorbitol, maltitol and reduced starch syrup, and sugar solutions prepared by recrystallization of sugar such as fondant. These saccharides may be used either alone or in combination. The proportion of the saccharides is, for example, 50 to 70 wt%.

Examples of the oil to be contained in the candy dough include animal oils, vegetable oils such as palm oil and rapeseed oil, and hydrogenated oils prepared by hydrogenating these vegetable oils. These oils may be used either alone or in combination. The proportion of the oil is, for example, 5 to 15 wt%.

The emulsifier to be contained in the candy dough is not particularly limited as long as it is capable of emulsifying the oil. Examples of the emulsifier include edible emulsifiers such as sucrose fatty acid esters, sorbitan fatty acid esters, monoglycerides, diglycerides and lecithin. These emulsifiers may be used either alone or in combination. The proportion of the emulsifier is, for example, 0.1 to 2 wt%.

Examples of the milk material include condensed milk such as sweetened full-fat condensed milk and sweetened non-fat condensed milk, butter and fresh cream. The proportion of the milk material is, for example, 20 to 40 wt%.

In the soft candy 1, the proportion of the pullulan is 0.2 to 5 wt%, and the proportion of the gelatin is 0.2 to 2 wt%. If the proportion of the pullulan is less than 0.2 wt%, the soft candy is very sticky to teeth. If the proportion of the pullulan is greater than 5 wt%, the soft candy has a very hard eating texture like a rubber. If the proportion of the gelatin is less than 0.2 wt%, the soft candy fails to have a rich eating texture. If the proportion of the gelatin is greater than 2 wt%, the soft candy has an excessively high chewability and, hence, an unsatisfactory chewing texture.

Besides the aforementioned ingredients, additives such as a protein component, table salt, an antioxidant, a sweetener, a flavoring agent, a colorant, a preservative, a vitamin and a mineral may be added to the candy dough as required to be thereby contained in the soft candy 1.

An exemplary ingredient formulation for the soft candy 1 described above is shown below in Table

**Table 1**

| Ingredients | Amount (wt%) |
|---|---|
| Sugar | 15.0 |
| Starch syrup | 39.0 |
| Fondant (sugar and starch syrup) | 10.0 |
| Vegetable protein | 1.0 |
| Vegetable oil | 9.0 |
| Emulsifier | 0.3 |
| Full-fat condensed milk | 30.0 |
| Full-fat milk powder | 3.0 |
| Fresh cream | 3.0 |
| Flavoring agent | 0.2 |
| Pullulan | 1.0 |
| Gelatin | 1.4 |
| Finished amount | 100.0 |

The finished amount shown in Table 1 means that the amount of a product obtained by mixing the aforementioned ingredients and boiling down the resulting mixture to dehydrate the mixture is 100.0 wt%.

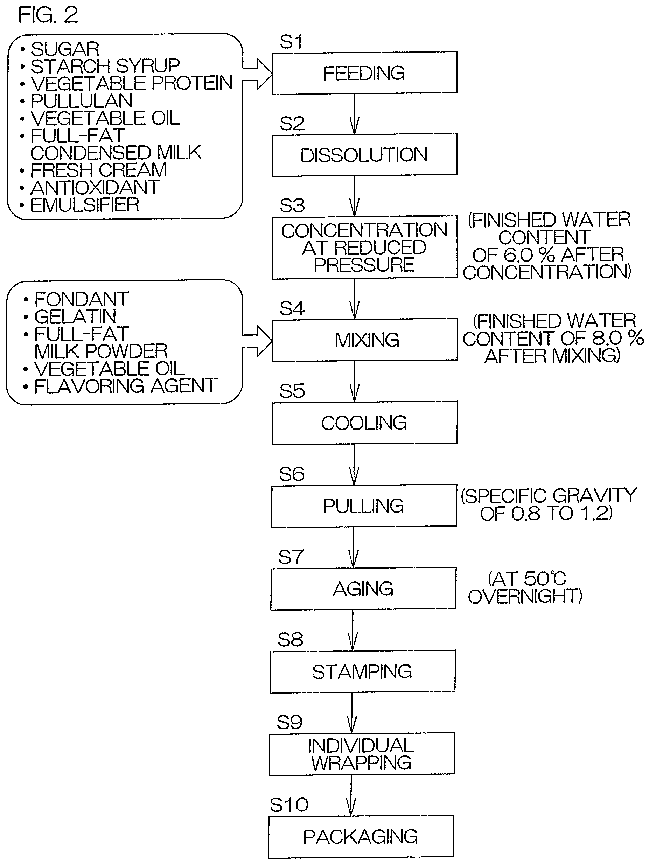

Referring to FIG. 2, a method for producing the soft candy 1 having the formulation shown in Table 1 will be next described in detail.

FIG. 2 is a flow chart showing a sequence of process steps for producing the soft candy.

First, the sugar, the starch syrup, the vegetable protein, the pullulan, the vegetable oil, the full-fat condensed milk, the fresh cream and the emulsifier are fed in proportions shown in Table 1 (the proportion of the vegetable oil is 7 wt%) in a steam cooker having stirring blades provided therein (S1).

Then, water is added to the ingredients in the steam cooker, and the sugar is dissolved in the water with heating and stirring (S2). Thus, a candy dough stock solution is prepared.

Subsequently, the internal pressure of the steam cooker containing the candy dough stock solution is reduced to concentrate the candy dough stock solution to a finished water content of 4.0 to 8.0 % (e.g., 6.0 %) (S3). Thus, the water content of the candy dough stock solution is reduced, whereby a candy dough is prepared.

In turn, the fondant, the gelatin, the full-fat milk powder, the vegetable oil and the flavoring agent are added in proportions shown in Table 1 (the proportion of the vegetable oil is 2 wt%) to the candy dough in the steam cooker. Further, water is added to the candy dough to a finished water content of 6.0 to 10.0 % (e.g., 8.0 %), and then the resulting mixture is stirred (S4). Thus, the candy dough is prepared, which contains both the pullulan and the gelatin.

Next, the resulting candy dough is cooled for 5 to 10 minutes by means of a cooling device (a cooling plate temperature-controlled with cooling water) regulated at a lower temperature on the order of 5°C to 15°C. Thus, the temperature of the candy dough is adjusted to 60°C to 70°C (S5).

Then, the cooled candy dough is stretched and kneaded by means of a pulling machine 3 (candy pulling machine) shown, for example, in Table 3 to be thereby aerated (S6).

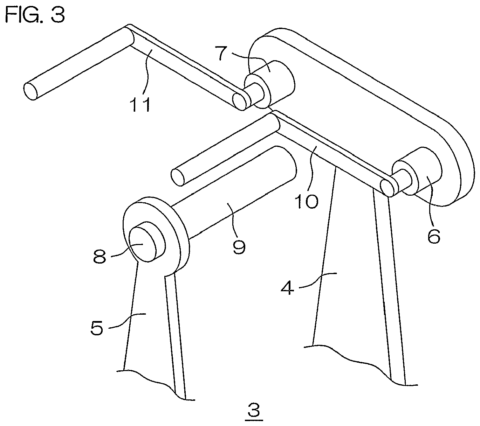

FIG. 3 shows an example (the schematic construction) of the pulling machine 3 to be used. The pulling machine 3 includes a first base member 4 and a second base member 5 disposed in opposed relation, a pair of first and second rotation shafts 6, 7 disposed in spaced relation and attached to the first base member 4 as projecting toward the second base member 5, and a stationary shaft 8 attached to the second base member 5 as projecting toward a middle point between the pair of rotation shafts 6 and 7.

A roller 9 is fitted around the stationary shaft 8 in freely rotatable manner with respect to the stationary shaft 8. First and second arms 10, 11 are respectively attached to the first and second rotation shafts 6, 7 to rotatively move along predetermined paths (round paths in this embodiment) around the roller 9.

In this embodiment, the combination of the first arm 10 and the first rotation shaft 6 which retains the first arm 10, and the combination of the second arm 11 and the second rotation shaft 7 which retains the second arm 11 each serve as a rotation arm by way of example.

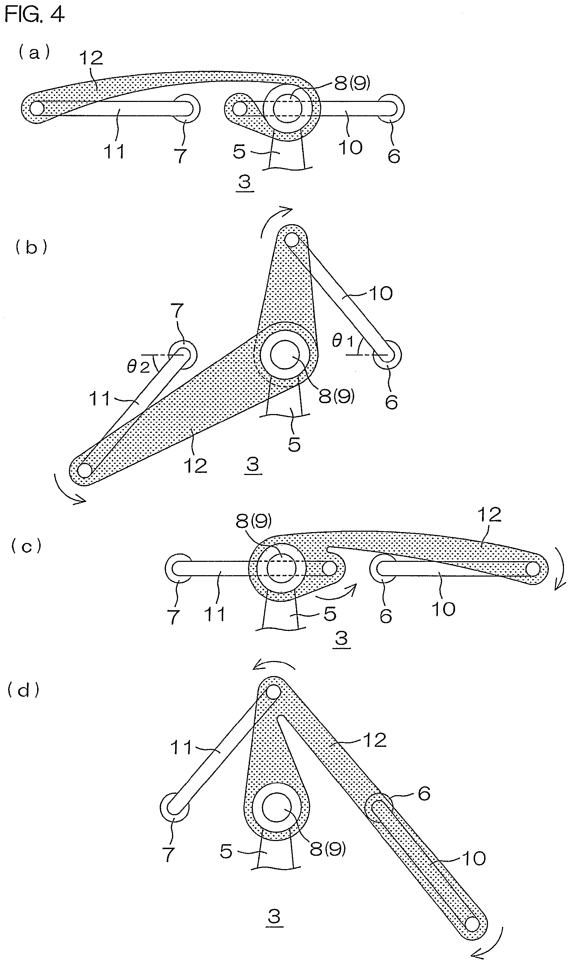

In the pulling step, the candy dough 12 is first wound around the roller 9 to cling around the roller 9 in an initial state with the roller 9, the first arm 10 and the second arm 11 aligned in this order as shown in FIG. 4(a). Then, one of opposite ends of the candy dough 12 is caught on the first arm 10, and the other end of the candy dough 12 is caught on the second arm 11. Thus, the candy dough 12 is set on the pulling machine 3.

Then, as shown in FIG. 4 (b), the pair of arms 10, 11 are rotated at the same rotation speed (e.g., 20 to 60 rpm, specifically 40 rpm, i.e., the rotation angle θ₁ of the arm 10 = the rotation angle θ₂ of the arm 11) in opposite directions. More specifically, the first arm 10 is rotated clockwise, while the second arm 11 is rotated counterclockwise. The first arm 10 is rotated away from the second rotation shaft 7, whereby a part of the candy dough 12 held by the first arm 10 is stretched along the rotation path of the first arm 10. At this time, the second arm 11 is rotated toward the first rotation shaft 6.

When the candy dough 12 is stretched to the maximum extent with the roller 9, the second arm 11 and the first arm 10 aligned in this order as shown in FIG. 4(c), an intermediate portion of the stretched candy dough 12 between the roller 9 and the first arm 10 is held from below by the second arm 11.

Then, as shown in FIG. 4(d), the second arm 11 is rotated away from the first rotation shaft 6, whereby the candy dough 12 stretched between the roller 9 and the first arm 10 is stretched along the rotation path of the second arm 11 to be folded at the portion of the candy dough 12 held by the second arm 11.

Thereafter, a stretching step is performed in substantially the same manner as shown in FIG. 4(c) to stretch the candy dough 12 to the maximum extent by the second arm 11, and a folding step is performed in substantially the same manner as shown in FIG. 4(d) to fold the candy dough 12 by the first arm 10.

Then, a process sequence including these steps and the steps shown in FIGS. 4 (b) to 4 (d) is repeatedly performed for 1 to 3 minutes (e.g., 2 minutes), whereby the candy dough 12 is repeatedly stretched and folded.

Through this process sequence, the candy dough 12 is kneaded and aerated to be thereby impregnated with gas bubbles. As a result, the specific gravity of the candy dough 12 can be reduced to not greater than 1.2 (preferably 0.8 to 1.2).

In this embodiment, the pulling step is performed by means of a pulling machine of a so-called batch type having a construction shown in FIG. 3 by way of example. Alternatively, the pulling step may be performed by means of a pulling machine of a so-called continuous type. That is, with the use of a pulling machine including about a dozen of rotary arms and about a dozen of rollers (the rotary arms and the rollers may be of any numbers), the candy dough is stretched between a first rotary arm and a first roller, then folded by a second adjacent arm, and scraped by a scraper (scraping blade) to be sequentially transferred to the next adjacent rotary arm and the next adjacent roller. Thus, the candy dough is repeatedly stretched and folded.

After the pulling step, the candy dough is allowed to stand at a temperature of 40°C to 60°C (e.g., 50°C) overnight to be thereby aged (S7).

Then, a stamping step is performed, in which the aged candy dough is rolled and stamped into the shape of the soft candy 1 (S8). In turn, the resulting soft candy pieces 1 are individually wrapped (S9), and conveyed in an individually wrapped state on a cooling conveyor to be temperature-controlled. Then, a predetermined number of such candy pieces are packaged in a box (for external packaging) (S10).

In order to confirm the effects of the present invention, an organoleptic evaluation test was performed.

In Example 1, the formulation of the soft candy 1 shown in Table 1 was employed. Candy doughs having different formulations were prepared by changing the proportions of the pullulan and the gelatin and properly adjusting the proportions of the sugar and the starch syrup according to the changes in the proportions of the pullulan and the gelatin as long as the taste of the soft candy 1 was not influenced. Eight types of samples were produced with and without the aeration of the thus prepared candy doughs in the pulling step. Except for the pulling step, the production of the samples was achieved in the same manner as described above. The formulations of the samples and the production processes with or without the pulling step are shown in Table 2.

**Table 2**

| Ingredients (Samples) (Pulling) | Formulation (wt%) | | | | | | | |
|---|---|---|---|---|---|---|---|---|
| | Example 1 | Example 2 | Comparative Example 1 | Comparative Example 2 | Comparative Example 3 | Comparative Example 4 | Comparative Example 5 | Comparative Example 6 |
| | YES | YES | YES | YES | NO | NO | NO | NO |
| Sugar | 15.0 | 13.4 | 15.5 | 15.6 | 15.0 | 13.4 | 15.5 | 15.6 |
| Starch syrup | 39.0 | 37.3 | 39.6 | 39.8 | 39.0 | 37.3 | 39.6 | 39.8 |
| Fondant | 10.0 | 10.0 | 10.0 | 10.0 | 10.0 | 10.0 | 10.0 | 10.0 |
| Vegetable protein | 1.0 | 1.0 | 1.0 | 1.0 | 1.0 | 1.0 | 1.0 | 1.0 |
| Vegetable oil | 9.0 | 9.0 | 9.0 | 9.0 | 9.0 | 9.0 | 9.0 | 9.0 |
| Emulsifier | 0.3 | 0.3 | 0.3 | 0.3 | 0.3 | 0.3 | 0.3 | 0.3 |
| Full-fat condensed milk | 30.0 | 30.0 | 30.0 | 30.0 | 30.0 | 30.0 | 30.0 | 30.0 |
| Full-fat milk powder | 3.0 | 3.0 | 3.0 | 3.0 | 3.0 | 3.0 | 3.0 | 3.0 |
| Fresh cream | 3.0 | 3.0 | 3.0 | 3.0 | 3.0 | 3.0 | 3.0 | 3.0 |
| Flavoring agent | 0.2 | 0.2 | 0.2 | 0.2 | 0.2 | 0.2 | 0.2 | 0.2 |
| Pullulan | 1.0 | 4.0 | - | 1.0 | 1.0 | 4.0 | - | 1.0 |
| Gelatin | 1.4 | 1.4 | 1.4 | - | 1.4 | 1.4 | 1.4 | - |
| Finished amount | 100.0 | 100.0 | 100.0 | 100.0 | 100.0 | 100.0 | 100.0 | 100.0 |

The soft candies of Examples 1, 2 and Comparative examples 1, 2 produced through the production process with the pulling step each had a specific gravity of 1.0. The soft candies of Comparative Examples 3, 4, 5, 6 produced through the production process without the pulling step each had a specific gravity of 1.3.

An organoleptic evaluation test was performed by five well-experienced panelists to evaluate the samples of the soft candies 1 shown in Table 2 for the stickiness to teeth and the richness of the eating texture. The results for the organoleptic evaluation test are shown in Table 3.

For the stickiness to teeth, the samples were evaluated based on the following four-level evaluation criteria in Table 3:
⊚: Not sticky to teeth
○: A little sticky to teeth
Δ: Sticky to teeth
×: Significantly sticky to teeth
For the richness of the eating texture, the samples were evaluated based on the following four-level evaluation criteria in Table 3:
⊚: Sufficiently rich eating texture
○: Moderately rich eating texture
Δ: Less rich eating texture
×: No rich eating texture

**Table 3**

| Samples | Pullulan (wt%) | Gelatin (wt%) | Pulling | Stickiness to teeth | Rich eating texture | Comment |
|---|---|---|---|---|---|---|
| Example 1 | 1.0 | 1.4 | YES | ⊚⊚⊚⊚⊚ | ⊚⊚⊚⊚○ | Chewy and puffy eating texture. Sufficiently chewy. Chewable. Chewy. Resilient. Fluffy. Moderately resilient. |
| Example 2 | 4.0 | 1.4 | YES | ⊚⊚⊚⊚⊚ | ○○○○Δ | A little hard but chewy. Sufficiently chewable. Not sticky to teeth. |
| Comparative Example 1 | - | 1.4 | YES | ○○ΔΔΔ | ○○○ΔΔ | Fluffy and soft eating texture. Less resilient. Less chewable. Soft eating texture. Fluffy eating texture. Plastic eating texture. |
| Comparative Example 2 | 1.0 | - | YES | ○○ΔΔΔ | ⊚○○ΔΔ | Sticky to teeth. Easy to soften. Not chewy. Clingy. Soft and stretchable. |
| Comparative Example 3 | 1.0 | 1.4 | NO | ○○○ΔΔ | ○○○○○ | Puffy eating texture. A little hard eating texture. Chewable. Chewy eating texture. Moderately hard but less resilient. |
| Comparative Example 4 | 4.0 | 1.4 | NO | ○○○○Δ | ΔΔΔΔ× | Chewy eating texture. Elastic. Partly unchewable. Highly chewy. Hard like resin. |
| Comparative Example 5 | - | 1.4 | NO | ○ΔΔΔΔ | ○○ΔΔΔ | Fluffy eating texture. Sticky to teeth at latter stage. Ordinary soft candy eating texture. Not resilient. Flattened in mouth. A little sticky. |
| Comparative Example 6 | 1.0 | - | NO | ΔΔΔ×× | ○ΔΔΔΔ | Sticky to teeth. Soft and easy to flatten. Gum-like eating texture. Sticky in mouth. Clingy to teeth. |

Table 3 indicates that the soft candy 1 of Example 1 produced by blending 1.0 wt% of the pullulan and 1.4 wt% of the gelatin and performing the pulling step was rated as very excellent without stickiness to teeth with a sufficient chewability, a moderate resilience and a light and rich eating texture. The soft candy 1 of Example 2 produced by blending 4.0 wt% of the pullulan and 1.4 wt% of the gelatin and performing the pulling step had a less rich eating texture, but was free from stickiness to teeth.

The soft candy 1 of Comparative Example 1 produced by blending 1.4 wt% of the gelatin but no pullulan and performing the pulling step was slightly sticky to teeth, and had a fluffy and plastic but less rich eating texture. The soft candy 1 of Comparative Example 2 produced by blending 1.0 wt% of the pullulan but no gelatin and performing the pulling step was slightly sticky to teeth, and had a non-chewy, excessively soft and less rich eating texture.

The soft candy 1 of Comparative Example 3 produced by blending 1.0 wt% of the pullulan and 1.4 wt% of the gelatin without performing the pulling step has rich eating texture, but less resilient, and slightly sticky to teeth. The soft candy 1 of Comparative Example 4 produced by blending 4.0 wt% of the pullulan and 1.4 wt% of the gelatin without performing the pulling step was highly chewy, and had a very poor eating texture. The soft candy 1 of Comparative Example 5 produced by blending 1.4 wt% of the gelatin but no pullulan without performing the pulling step was significantly sticky to teeth with adhesiveness, and had a less rich eating texture. The soft candy 1 of Comparative Example 6 produced by blending 1.0 wt% of the pullulan but no gelatin without performing the pulling step was significantly sticky to teeth to cling to teeth, and had a less rich eating texture.

Samples were produced in substantially the same manner as in Example 1, except that the proportion of the pullulan was reduced so as to determine the proper range (particularly, the lower limit) of the proportion of the pullulan in the soft candy 1. An organoleptic evaluation test was performed to evaluate the samples. The results of the organoleptic evaluation test are shown in Table 4.

**Table 4**

| Samples | Pullulan (wt%) | Gelatin (wt%) | Pulling | Stickiness to teeth | Rich eating texture | Comment |
|---|---|---|---|---|---|---|
| Comparative Example 1 | - | 1.4 | YES | ○○ΔΔΔ | ○○○ΔΔ | Fluffy and soft eating texture. Less resilient. Less chewable. Soft eating texture. Fluffy eating texture. Plastic eating texture. |
| Comparative Example 7 | 0.1 | 1.4 | YES | ○○○ΔΔ | ○○○○Δ | Fluffy at initial stage. A little hard at initial stage. Less resilient. Easy to flatten. Soft at initial stage. A little clingy to teeth at latter stage. Slightly sticky eating texture like starch syrup. Partly unchewable. |
| Example 3 | 0.2 | 1.4 | YES | ⊚○○○○ | ○○○○○ | Fluffy eating texture at initial stage. Clingy to teeth at latter stage. Highly plastic eating texture. Sticky to teeth but easy to remove. Resilient. |
| Example 4 | 0.3 | 1.4 | YES | ⊚⊚⊚⊚○ | ⊚⊚⊚○○ | Resilient. Chewy. Resilient. Rich. Fluffy. Chewable and less sticky to teeth. |
| Example 5 | 0.4 | 1.4 | YES | ⊚⊚⊚⊚⊚ | ⊚⊚⊚⊚○ | Soft and resilient eating texture. Resilient eating texture. Rich eating texture. Moderately resilient after chewing. A little tight eating texture. |
| Example 6 | 0.5 | 1.4 | YES | ⊚⊚⊚⊚⊚ | ⊚⊚⊚⊚○ | Not sticky to teeth. Sufficiently chewy. Not dull at latter stage. Soft at initial stage. Continuous puffy eating texture. Good eating texture. Good melt-in-mouth texture. |
| Example 1 | 1.0 | 1.4 | YES | ⊚⊚⊚⊚⊚ | ⊚⊚⊚⊚○ | Chewy and puffy eating texture. Sufficiently chewable. Chewable. Chewy. Resilient. Fluffy. Moderately resilient. |

For the respective samples, as shown in Table 4, the proportion of the pullulan was 0 wt% for Comparative Example 1 (the same as in Table 3), 0.1 wt% for Comparative Example 7, 0.2 wt% for Example 3, 0.3 wt% for Example 4, 0.4 wt% for Example 5, 0.5 wt% for Example 6, and 1.0 wt% for Example 1 (the same as in Table 3). According to the change in the proportion of the pullulan, the proportions of the sugar and the starch syrup were properly changed as long as the taste of the soft candy 1 was not influenced. For the production of these samples, the proportion of the gelatin was 1.4 wt%, and the pulling step was performed. The samples thus produced each had a specific gravity of 1.0.

An organoleptic evaluation test was performed in the same manner as shown in Table 3 by five well-experienced panelists to evaluate the samples of the soft candies for the stickiness to teeth and the richness of the eating texture. The same evaluation criteria as shown in Table 3 were employed for the evaluation.

Table 4 indicates that the soft candy 1 of Comparative Example 1 produced by blending no pullulan was slightly sticky to teeth, and had a less rich, puffy and plastic eating texture. The soft candy 1 of Comparative Example 7 produced by blending 0.1 wt% of the pullulan was slightly sticky to teeth, and had a less resilient and less rich eating texture. The soft candy 1 of Example 3 produced by blending 0.2 wt% of the pullulan had no problem associated with the stickiness to teeth, and had a slightly plastic but resilient and rich eating texture. The soft candy 1 of Example 4 produced by blending 0.3 wt% of the pullulan was substantially free from stickiness to teeth, and had a soft, resilient and rich eating texture. The soft candy 1 of Example 5 produced by blending 0.4 wt% of the pullulan was free from stickiness to teeth, and had a moderately resilient and rich eating texture. The soft candy 1 of Example 6 produced by blending 0.5 wt% of the pullulan was free from stickiness to teeth, and had a moderately resilient and rich eating texture like the soft candy of Example 5. The soft candy 1 of Example 1 produced by blending 1.0 wt% of the pullulan was completely free from stickiness to teeth, and had a sufficiently chewy, moderately resilient, light and rich eating texture.

According to Table 4, it is confirmed that, even if the proportion of the pullulan is reduced to 0.2 wt% in the formulation of the soft candy 1 of Example 1, the soft candy is less sticky to teeth, and has a light and rich eating texture and a sufficient chewability.

As described above, where the soft candy is produced as having a specific gravity of not greater than 1.2 by blending 0.2 to 5 wt% of the pullulan and 0.2 to 2 wt% of the gelatin and performing the pulling step as in Examples 1 to 6, the soft candy is less sticky to teeth, and has a light and rich eating texture and a sufficient chewability.

The present invention is not limited to the embodiment described above, but various modifications may be made within the scope of the present invention defined by the following claims.

For example, the formulation of the soft candy 1 shown in Table 1 is merely illustrative of the present invention, and may be altered as long as the proportion of the pullulan is 0.2 to 5 wt% and the proportion of the gelatin is 0.2 to 2 wt%.

The shape of the soft candy 1 is not necessarily required to be spherical but may be, for example, a stick shape.

In the pulling step, a continuous pulling machine may be used, which includes a plurality of pulling machines 3 arranged with their stationary shafts 8 disposed parallel to each other, and the candy dough 12 may be transferred from one machine to another.

### REFERENCE SIGNS LIST

1: SOFT CANDY
2: INDIVIDUAL WRAPPING SHEET
3: PULLING MACHINE
4: FIRST BASE MEMBER
5: SECOND BASE MEMBER
6: ROTATION SHAFT
7: ROTATION SHAFT
8: STATIONARY SHAFT
9: ROLLER
10: ARM
11: ARM
12: CANDY DOUGH

## Claims

1. A soft candy production method comprising the steps of:
preparing a candy dough (12) containing 0.2 to 5 wt% of pullulan and 0.2 to 2 wt% of gelatin; and
stretching and kneading the candy dough (12) to aerate the candy dough (12) by means of a pulling machine (3) to impregnate the candy dough (12) with gas bubbles and to let the candy dough (12) have a specific gravity controlled to not greater than 1.2, wherein
the step of preparing the candy dough (12) includes
a step of preparing the candy dough by concentrating a candy dough stock solution containing pullulan and not containing gelatin to a finished water content of 4.0 to 8.0 %,
a step of preparing the candy dough containing 0.2 to 5 wt% of pullulan and 0.2 to 2 wt% of gelatin by adding gelatin to the concentrated candy dough, then adding water and stirring the resulting mixture of the candy dough to a finished water content of 6.0 to 10 %, and
the method further comprising the step of shaping the candy dough (12) imparted with the specific gravity control to not greater than 1.2.

2. The soft candy production method according to claim 1,
wherein the pulling machine (3) includes at least two rotary arms (10, 11) disposed in spaced relation and a roller (9) disposed between the two rotary arms (10, 11),
wherein the pulling step (S6) comprises the steps of:
stretching the candy dough (12) between one of the two rotary arms (10, 11) and the roller (9); and
holding an intermediate portion of the stretched candy dough (12) by the other rotary arm and stretching the candy dough (12) by a rotary force of the other rotary arm to fold the candy dough (12) at the portion of the candy dough (12) held by the other rotary arm.

3. The soft candy production method according to claim 2, wherein the pulling machine (3) includes a predetermined number of rotary arms (10, 11) disposed in spaced relation to each other, and a predetermined number of rollers (9) disposed between respective adjacent pairs of rotary arms (10, 11).

4. The soft candy production method according to claim 2 or 3, wherein the candy dough stretching step and the candy dough folding step are repeatedly performed in the pulling step (S6).

5. The soft candy production method according to any one of claims 1 to 4, wherein the step of imparting the candy dough with the controlled specific gravity includes the step of controlling the specific gravity of the candy dough to 0.8 to 1.2.

6. The soft candy production method according to any one of claims 1 to 5, further comprising a step of cooling the candy dough containing 0.2 to 5 wt% of pullulan and 0.2 to 2 wt% of gelatin to a finished temperature of the candy dough of 60 °C to 70 °C, before the step of impregnating the candy dough with gas bubbles.

7. The soft candy production method according to claim 6, wherein the step of cooling the candy dough is performed for 5 to 10 minutes by means of a cooling device regulated at a temperature on the order of 5 °C to 15 °C.

8. The soft candy production method according to any one of claims 1 to 7, further comprising a step of aging the candy dough at a temperature of 40 °C to 60 °C after the pulling step.

## Patentansprüche

1. Verfahren zur Herstellung von Weichbonbons, umfassend die Schritte:
Herstellen eines Bonbonteigs (12), der 0,2 bis 5 Gew.-% Pullulan und 0,2 bis 2 Gew.-% Gelatine enthält; und
Dehnen und Kneten des Bonbonteigs (12), um den Bonbonteig (12) mittels einer Ausziehmaschine (3) zu belüften, um den Bonbonteig (12) mit Gasblasen zu imprägnieren und den Bonbonteig (12) eine auf nicht mehr als 1,2 gesteuerte spezifische Dichte aufweisen zu lassen, wobei
der Schritt des Herstellens des Bonbonteiges (12) beinhaltet
einen Schritt zur Herstellung des Bonbonteigs durch Konzentrieren einer Bonbonteig-Stammlösung, die Pullulan und keine Gelatine enthält, auf einen fertigen Wassergehalt von 4,0 bis 8,0 %.,
einen Schritt zur Bereitstellung des Bonbonteigs, der 0,2 bis 5 Gew.-% Pullulan und 0,2 bis 2 Gew.-% Gelatine enthält, durch Zugabe von Gelatine zu dem konzentrierten Bonbonteig, dann durch Zugabe von Wasser und durch Rühren der resultierenden Mischung des Bonbonteigs auf einen fertigen Wassergehalt von 6,0 bis 10 %, und
wobei das Verfahren ferner den Schritt des Formens des Bonbonteigs (12) aufweist, dem die spezifische Dichtesteuerung auf nicht mehr als 1,2 erteilt ist.

2. Verfahren zur Herstellung von Weichbonbons nach Anspruch 1,
wobei die Ausziehmaschine (3) mindestens zwei Dreharme (10, 11) aufweist, die in beabstandeter Position angeordnet sind, und eine Rolle (9) aufweist, die zwischen den beiden Dreharmen (10, 11) angeordnet ist,
wobei der Ausziehschritt (S6) die Schritte umfasst:
Dehnen des Bonbonteigs (12) zwischen einem der beiden Dreharme (10, 11) und der Rolle (9); und
Halten eines Zwischenabschnitts des gedehnten Bonbonteigs (12) durch den anderen Dreharm und Dehnen des Bonbonteigs (12) durch eine Drehkraft des anderen Dreharms, um den Bonbonteig (12) an dem vom anderen Dreharm gehaltenen Abschnitt des Bonbonteigs (12) zu falten.

3. Verfahren zur Herstellung von Weichbonbons nach Anspruch 2, wobei die Ausziehmaschine (3) eine vorbestimmte Anzahl von Dreharmen (10, 11) aufweist, die im Abstand zueinander angeordnet sind, und eine vorbestimmte Anzahl von Rollen (9), die zwischen jeweils benachbarten Paaren von Dreharmen (10, 11) angeordnet sind.

4. Verfahren zur Herstellung von Weichbonbons nach Anspruch 2 oder 3, wobei der Schritt zum Dehnen des Bonbonteigs und der Schritt zum Falten des Bonbonteigs wiederholt im Ausziehschritt (S6) durchgeführt werden.

5. Verfahren zur Herstellung von Weichbonbons nach einem der Ansprüche 1 bis 4, wobei der Schritt des Erteilens des Bonbonteigs auf die gesteuerte spezifische Dichte den Schritt des Steuerns der spezifischen Dichte des Bonbonteigs auf 0,8 bis 1,2 aufweist.

6. Verfahren zur Herstellung von Weichbonbons nach einem der Ansprüche 1 bis 5, ferner umfassend einen Schritt des Kühlens des Bonbonteigs, der 0,2 bis 5 Gew.-% Pullulan und 0,2 bis 2 Gew.-% Gelatine aufweist, auf eine Endtemperatur des Bonbonteigs von 60 °C bis 70 °C, und zwar vor dem Schritt des Imprägnierens des Bonbonteigs mit Gasblasen.

7. Verfahren zur Herstellung von Weichbonbons nach Anspruch 6, wobei der Schritt des Kühlens des Bonbonteigs für 5 bis 10 Minuten mittels einer Kühlvorrichtung durchgeführt wird, die auf eine Temperatur in der Größenordnung von 5 °C bis 15 °C geregelt wird.

8. Verfahren zur Herstellung von Weichbonbons nach einem der Ansprüche 1 bis 7, ferner umfassend einen Schritt des Reifens des Bonbonteigs bei einer Temperatur von 40 °C bis 60 °C nach dem Ausziehvorgang.

## Revendications

1. Méthode de production de bonbons mous, comprenant les étapes consistant à :
préparer une pâte de bonbon (12) contenant de 0,2 à 5% en poids de pullulane et de 0,2 à 2% en poids de gélatine ; et
étirer et pétrir la pâte de bonbon (12) afin d'aérer la pâte de bonbon (12) au moyen d'une étireuse (3) afin d'imprégner la pâte de bonbon (12) avec des bulles de gaz et de permettre à la pâte de bonbon (12) d'avoir une gravité spécifique et contrôlée pour ne pas être supérieure à 1,2, où
l'étape de préparation de la pâte de bonbon (12) comporte
une étape consistant à préparer la pâte de bonbon par la concentration d'une solution mère de pâte de bonbon contenant du pullulane et ne contenant pas de gélatine jusqu'à une teneur en eau finie allant de 4,0 à 8,0%,
une étape consistant à préparer la pâte de bonbon contenant de 0,2 à 5% en poids de pullulane et de 0,2 à 2% en poids de gélatine, par l'addition de gélatine à la pâte de bonbon concentrée, puis ajouter de l'eau et malaxer le mélange résultant de la pâte de bonbon jusqu'à une teneur en eau finie allant de 6,0 à 10%, et
la méthode comprenant en outre l'étape consistant à façonner la pâte de bonbon (12) dotée du contrôle de gravité spécifique jusqu'à ne pas être supérieure à 1,2.

2. Méthode de production de bonbons mous selon la revendication 1,
dans laquelle l'étireuse (3) comporte au moins deux bras rotatifs (10, 11) disposés à une certaine distance et un rouleau (9) disposé entre les deux bras rotatifs (10, 11),
où l'étape d'étirement (S6) comprend les étapes consistant à :
étirer la pâte de bonbon (12) entre l'un des deux bras rotatifs (10, 11) et le rouleau (9) ; et
maintenir une portion intermédiaire de la pâte de bonbon (12) étirée par l'autre bras rotatif et étirer la pâte de bonbon (12) par une force rotative de l'autre bras rotatif afin de replier la pâte de bonbon (12) au niveau de la portion de pâte de bonbon (12) maintenue par l'autre bras rotatif.

3. Méthode de production de bonbons mous selon la revendication 2, dans laquelle l'étireuse (3) comporte un nombre prédéterminé de bras rotatifs (10, 11) disposés à une certaine distance les uns par rapport aux autres, et un nombre prédéterminé de rouleaux (9) disposés entre des paires adjacentes respectives de bras rotatifs (10, 11).

4. Méthode de production de bonbons mous selon la revendication 2 ou 3, dans laquelle l'étape d'étirement de la pâte de bonbon et l'étape de pliage de la pâte de bonbon sont effectuées de manière répétée dans l'étape d'étirement (S6).

5. Méthode de production de bonbons mous selon l'une quelconque des revendications 1 à 4, dans laquelle l'étape consistant à doter la pâte de bonbon avec la gravité spécifique contrôlée, comporte l'étape consistant à contrôler la gravité spécifique de la pâte de bonbon jusqu'à de 0,8 à 1,2.

6. Méthode de production de bonbons mous selon l'une quelconque des revendications 1 à 5, comprenant en outre une étape consistant à refroidir la pâte de bonbon contenant de 0,2 à 5% en poids de pullulane et de 0,2 à 2% en poids de gélatine jusqu'à une température finie de la pâte de bonbon allant de 60°C à 70°C, avant l'étape consistant à imprégner la pâte de bonbon avec des bulles de gaz.

7. Méthode de production de bonbons mous selon la revendication 6, dans laquelle l'étape de refroidissement de la pâte de bonbon est effectuée pendant de 5 à 10 minutes au moyen d'un dispositif de refroidissement régulé à une température de l'ordre de 5°C à 15°C.

8. Méthode de production de bonbons mous selon l'une quelconque des revendications 1 à 7, comprenant en outre une étape consistant à faire maturer la pâte de bonbon à une température allant de 40°C à 60°C après l'étape d'étirement.
